# DEMANDE DE BREVET EUROPEEN

(11) **EP 4 575 721 A1**
(43) Date de publication de la demande: **25.06.2025**
(21) Numéro de dépôt: 24218816.7
(22) Date de dépôt: 10.12.2024
(51) Int. Cl.: G06F 1/3287

(54) **CIRCUIT INTÉGRÉ COMPORTANT AU MOINS DEUX DOMAINES D'ALIMENTATION APTES À ÊTRE PLACÉS DANS UN ÉTAT DE RÉTENTION, ET PROCÉDÉ DE GESTION IMBRIQUÉE DE L'ALIMENTATION CORRESPONDANT**

(30) Priorité: 21.12.2023 FR 2314852
(71) Demandeur: STMicroelectronics International N.V., 1228 Plan-les-Ouates, Geneva (CH)
(72) Inventeur: MOULIN, Cyril, 13090 AIX EN PROVENCE (FR); GRIL-MAFFRE Jean-Michel, 13090 AIX EN PROVENCE (FR); CASSAGNES, Hervé, 13300 SALON DE PROVENCE (FR)
(74) Mandataire: Casalonga

(57) **Abrégé**

Le circuit intégré comporte une partie logique (LG) apte à être alimentée par une tension d'alimentation principale (V11), comprenant un premier domaine d'alimentation toujours actif (PDO), et au moins deux domaines d'alimentation aptes à être désactivés dans un état de rétention (PD1, PD2). La partie logique (LG) comporte des lignes d'alimentation auxiliaires (LGN) configurées pour alimenter chaque domaine d'alimentation désactivé et placé dans l'état de rétention (PD1, PD2 avec la tension d'alimentation (V11_0) du premier domaine d'alimentation toujours actif (PDO).

## Description

Des modes de réalisation et de mise en oeuvre concernent les circuits intégrés, comportant en particulier des domaines d'alimentations aptes à être désactivés et placés dans un état de rétention, ainsi qu'une gestion imbriquée de l'alimentation correspondante.

En effet, des circuits intégrés offrent la possibilité d'un mode basse consommation, dans lequel la consommation d'énergie est réduite et tend à être minimisée.

Typiquement, des portions du circuit intégré peuvent être désactivés, en particulier au sein d'une partie logique, afin de limiter la consommation du circuit, et limitant également certaines fonctionnalités du circuit.

La partie logique du circuit correspond par exemple au « coeur » d'un processeur, comportant usuellement des dispositifs synchrones (ou « dynamiques ») cadencés sur fronts d'horloge, tels que des portes logiques combinatoire et des bascules ; et des dispositifs séquentiels (ou « statiques ») cadencés sur niveaux d'horloge, tels que des verrous ou des registres.

Classiquement, pour offrir le fonctionnement en mode basse consommation, sont prévus un domaine d'alimentation toujours actif et un domaine d'alimentation pouvant être désactivé et placé dans un état de rétention.

Un domaine d'alimentation correspond par exemple à un ensemble de circuits ou de fonctionnalités utilisant la même alimentation en fonctionnement normal, et étant allumés ou éteints en même temps.

Dans l'état de rétention, les états (c'est-à-dire les données contenues) des éléments séquentiels/statiques du domaine d'alimentation désactivé sont avantageusement conservés par un circuit de rétention (par exemple du type verrous), alors que les éléments de logique synchrone/dynamique et les éléments de logique combinatoire/dynamique sont éteints.

Cependant, dans les modes à faible consommation classiques, le domaine d'alimentation toujours actif continue sa consommation normale, subissant notamment de fuites de courants, et de manière sensiblement proportionnelle à la taille du domaine d'alimentation toujours actif (c'est-à-dire sensiblement la quantité de fonctionnalités restant en activité).

Or, classiquement, la taille du domaine d'alimentation toujours actif est limitée en matière de réduction, en raison du besoin d'un minimum d'éléments de commande permettant de « réveiller » le domaine d'alimentation désactivé et placé dans l'état de rétention.

Ainsi, dans ce type de circuit intégré, il existe un besoin de réduire encore la consommation dans le mode à faible consommation, notamment sur le plan des fuites de courant, tout en conservant la fonctionnalité de rétention, c'est-à-dire la conservation des données statiques du domaine placé dans l'état de rétention.

Selon un aspect, il est proposé à cet égard un circuit intégré comportant une partie logique comprenant un premier domaine d'alimentation dit toujours actif (connue de l'homme de l'art sous la dénomination anglosaxonne « always on power domain ») apte à être alimentée par une tension d'alimentation, et au moins deux domaines d'alimentation aptes à être désactivés (c'est à dire par exemple déconnectés de la tension d'alimentation) et placés dans un état de rétention, dans lequel la partie logique comporte des lignes d'alimentation auxiliaires configurées pour alimenter des moyens de rétention (par exemple des bascules ou verrous de rétention) de chaque domaine d'alimentation désactivé et placé dans l'état de rétention, avec ladite tension d'alimentation du premier domaine d'alimentation toujours actif.

En d'autres termes, le circuit intégré selon cet aspect peut offrir plusieurs degrés de basse consommation, en désactivant une sélection de l'un ou plusieurs desdits domaines, ces derniers, placés dans l'état de rétention, étant tous alimentés par le domaine d'alimentation toujours actif.

En conséquence, on peut considérer que le domaine d'alimentation contenant les éléments de commande permettant de « réveiller » l'autre domaine d'alimentation désactivé et placé dans l'état de rétention, qui est le domaine toujours actif dans le cas classique, peut, dans le circuit intégré selon cet aspect, être lui aussi désactivé et placé dans l'état de rétention.

Ainsi, le circuit intégré selon cet aspect permet par exemple de concevoir le premier domaine d'alimentation toujours actif avec une taille et une fonctionnalité bien inférieure au cas classique, ne comportant par exemple que des éléments d'alimentation auxiliaire et éventuellement des éléments de commande (en faible quantité), aptes à réveiller le domaine d'alimentation contenant les éléments de commande (en plus grande quantité) permettant de « réveiller » l'autre domaine d'alimentation, de sorte que la consommation du circuit est elle aussi inférieure.

Selon un mode de réalisation, lesdits domaines d'alimentation aptes à être désactivés et placés dans l'état de rétention sont organisés en rangs hiérarchiques, de sorte que des moyens de commande, configurés pour commander la désactivation et le placement dans l'état de rétention ou non de respectivement chaque domaine de rang N, appartiennent au domaine de rang N-1 ; les moyens de commande configurés pour commander la désactivation et le placement dans l'état de rétention ou non du domaine de rang le plus bas appartenant à un autre domaine d'alimentation.

En d'autres termes, dans cette organisation, les domaines d'alimentation sont « imbriqués » de proche en proche (N ; N-1), tout particulièrement du point de vue de la fonctionnalité de gestion et commandes de la désactivation et placement dans l'état de rétention, ainsi que de la fonctionnalité de gestion et commande du « réveil » respectif, c'est-à-dire la réactivation dans l'état de marche du domaine respectif.

Selon un mode de réalisation, l'autre domaine d'alimentation est le premier domaine d'alimentation toujours actif, ou bien est un autre domaine d'alimentation toujours actif alimenté par une autre tension d'alimentation principale.

Selon un mode de réalisation, la partie logique est configurée pour désactiver et placer dans l'état de rétention le domaine d'alimentation de rang N, par une séquence comprenant des désactivations et placements de chaque domaine d'alimentation de rang supérieur dans l'état de rétention, successivement par rangs décroissants.

Selon un mode de réalisation, la partie logique est configurée pour réactiver et placer hors de l'état de rétention le domaine d'alimentation de rang N, par une séquence comprenant des réactivations et placement hors de l'état de rétention de chaque domaine d'alimentation de rang inférieur, successivement par rangs croissants.

Selon un autre aspect, il est également proposé un procédé de gestion de l'alimentation d'un circuit intégré muni d'une partie logique comportant un premier domaine d'alimentation dit toujours actif alimenté par une tension d'alimentation, et au moins deux domaines d'alimentation aptes à être désactivés et placés dans un état de rétention, dans lequel le procédé comprend une alimentation de chaque domaine d'alimentation désactivé et placé dans l'état de rétention avec la tension d'alimentation du premier domaine d'alimentation toujours actif.

Par exemple, le procédé comprend une déconnexion de chaque domaine d'alimentation dans l'état désactivé de rétention, de la tension d'alimentation.

Selon un mode de mise en oeuvre, lesdits domaines d'alimentation aptes à être désactivés et placés dans l'état de rétention sont organisés en rangs hiérarchiques, de sorte que chaque domaine de rang J est désactivé et placé dans l'état de rétention ou non, par des commandes issues de moyens de commande appartenant au domaine de rang J-1 ; le domaine de rang le plus bas étant désactivé et placé dans l'état de rétention ou non par des commandes issues de moyens de commande appartenant à un autre domaine d'alimentation.

Selon un mode de mise en oeuvre, l'autre domaine d'alimentation est le premier domaine d'alimentation toujours actif, ou bien est un autre domaine d'alimentation toujours actif alimenté par une autre tension d'alimentation principale.

Selon un mode de mise en oeuvre, le procédé comprend une désactivation et un placement dans l'état de rétention d'un domaine d'alimentation de rang J, par une séquence comprenant des désactivations et placement dans l'état de rétention de chaque domaine d'alimentation de rang supérieur, successivement par rangs décroissants.

Selon un mode de mise en oeuvre, le procédé comprend une réactivation et placement hors de l'état de rétention d'un domaine d'alimentation de rang J, par une séquence comprenant des réactivations et placement hors de l'état de rétention de chaque domaine d'alimentation de rang inférieur, successivement par rangs croissants.

D'autres avantages et caractéristiques de l'invention apparaîtront à l'examen de la description détaillée de modes de réalisation et de mise en oeuvre, nullement limitatifs, et des dessins annexés, sur lesquels les figures :
[Fig.1] ;
[Fig.2] ;
[Fig.3] ;
[Fig.4] ;

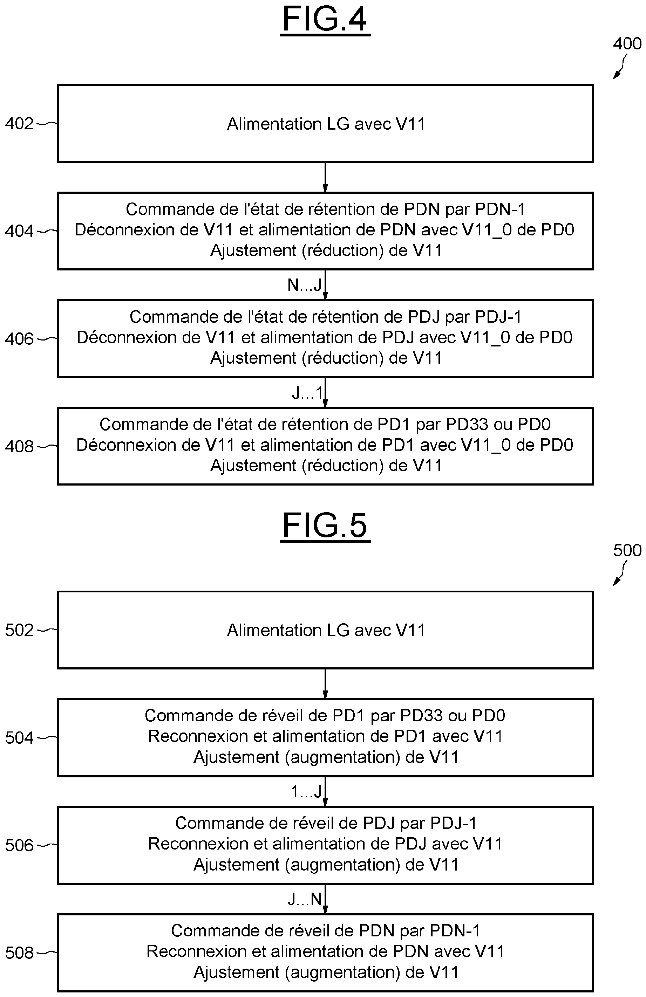

[Fig.5] illustrent des modes de réalisation et de mise en oeuvre de l'invention.

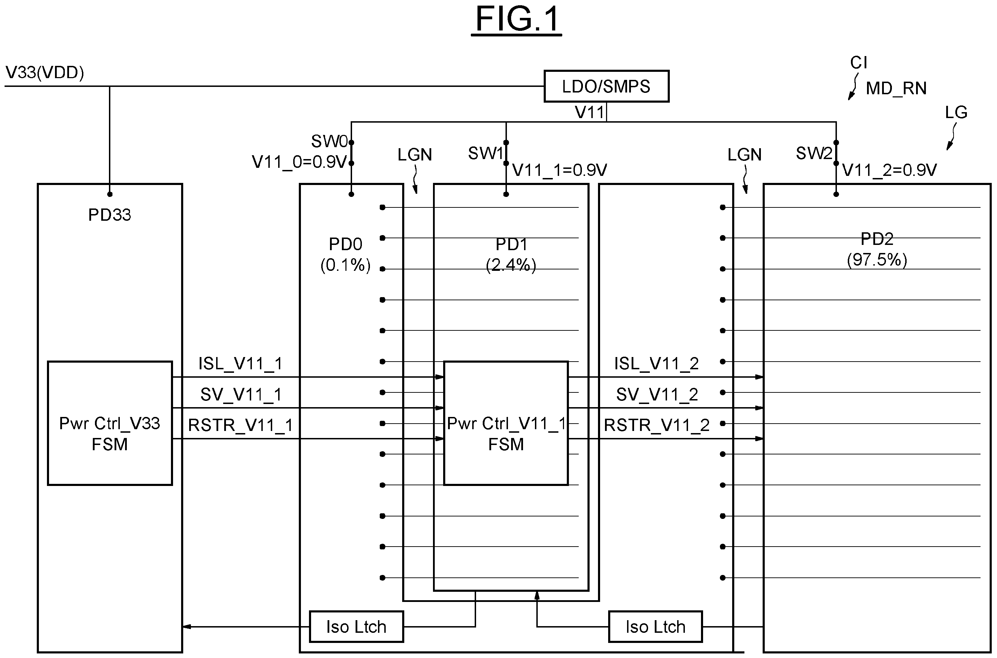

La figure 1 illustre un exemple de circuit intégré CI dans un état de marche (usuellement « run » en anglais) MD_RN. Le circuit intégré CI est par exemple un microcontrôleur, comportant une partie logique LG, par exemple le coeur d'une unité centrale de calculs. La partie logique LG est subdivisée en domaines d'alimentation PD0, PD1, PD2, PD33.

Chaque domaine d'alimentation PD0, PD1, PD2, PD33 correspond par exemple à un ensemble de circuits ou de fonctionnalités de la partie logique LG utilisant la même alimentation V11, V33 en fonctionnement normal, et étant allumés ou éteints en même temps.

Dans cet exemple une première tension d'alimentation V33, usuellement désignée VDD, est fournie au circuit intégré CI, par exemple à partir d'une source extérieure.

A partir de la tension V33, un régulateur de tension LDO/SMPS est configuré pour générer une tension V11 adapté aux domaines PD0, PD1, PD2 de la partie logique LG.

Un autre domaine PD33 peut être prévu pour être alimenté directement par la tension V33 (VDD), par exemple un domaine mettant en oeuvre des fonctionnalités « analogiques » du type interfaces d'entrée-sortie.

Par exemple, la tension V33 peut être de sensiblement 3,3V, tandis que la tension d'alimentation régulée V11, que l'on nommera tension d'alimentation principale, peut être de sensiblement 1,1V ou inférieure, par exemple 0,9V.

La partie logique LG comporte un premier domaine d'alimentation toujours actif PD0, et (au moins) deux domaines d'alimentation aptes à être désactivés et placés dans un état de rétention PD1, PD2. Le domaine d'alimentation PD33 peut éventuellement lui aussi être toujours actif.

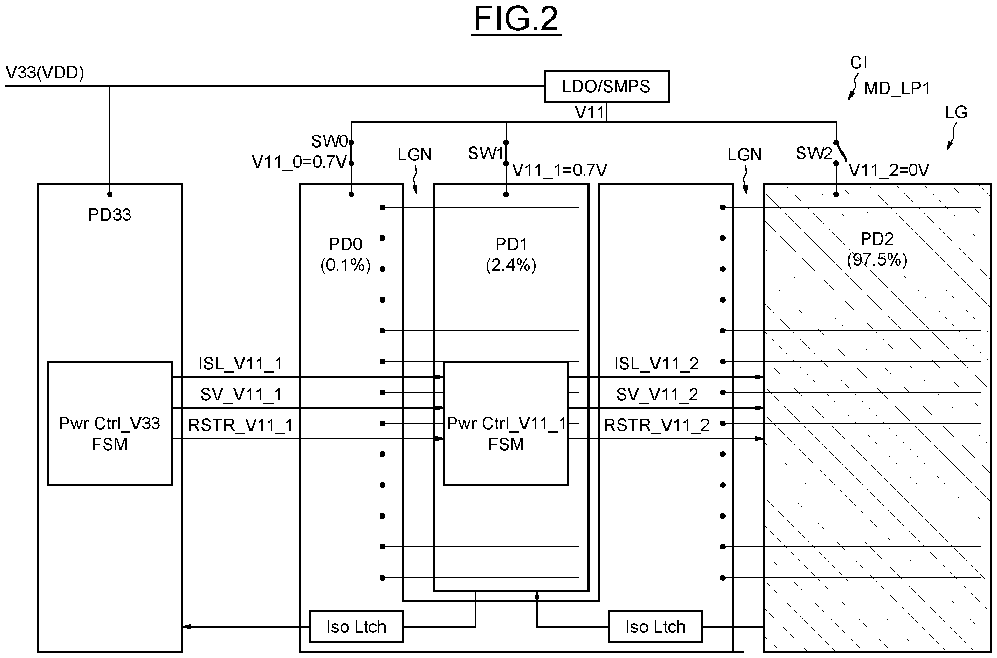

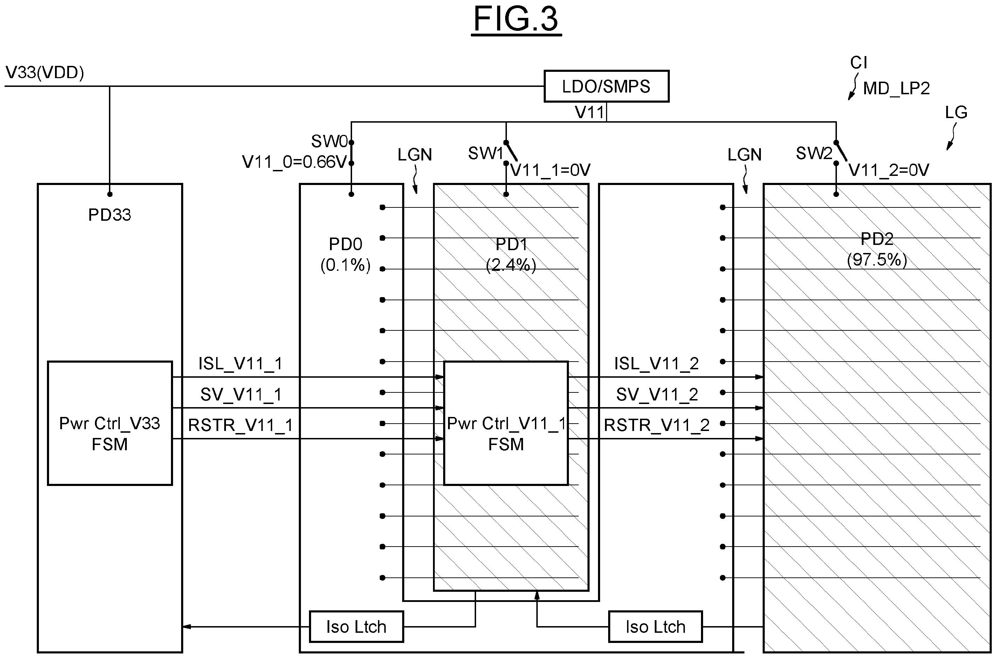

Par « désactivé », on entend par exemple que les domaines d'alimentation PD1, PD2 sont déconnectés de la tension d'alimentation principale V11 (voir figures 2 et 3), usuellement au moyen de circuits commutateurs SW0, SW1, SW2 connectés entre le régulateur de tension LDO/SMPS et les domaines d'alimentation respectifs de la partie logique LG.

Dans l'état de rétention, les états (c'est-à-dire les données contenues) des éléments séquentiels, par exemple du type verrous, du domaine d'alimentation désactivé PD1, PD2 sont avantageusement conservés par des moyens de rétention, alors que les éléments de logique synchrone/dynamique sont désactivés.

Les moyens de rétentions, classiques et connus en soi peuvent par exemple comporter un circuit séquentiel/statique supplémentaire, par exemple du type verrou, configuré pour être dans le même état (contenir la même donnée) qu'un dispositif séquentiel fonctionnel, et pour être alimenté par une ligne d'alimentation auxiliaire LGN lorsque le domaine PD1, PD2 est désactivé.

En d'autres termes, lesdits domaines PD1, PD2 aptes à être désactivés et placés dans l'état de rétention, comportent des moyens de rétention configurés pour retenir un état statique contenu dans les éléments séquentiels du domaine respectif PD1, PD2 ; les lignes d'alimentation auxiliaire étant configurées pour alimenter les moyens de rétentions desdits domaines d'alimentation.

Ainsi, la partie logique LG comporte à cet égard des lignes d'alimentation auxiliaires LGN configurées pour alimenter chaque domaine d'alimentation désactivé dans l'état de rétention PD1, PD2 avec la tension d'alimentation V11_0 du premier domaine d'alimentation toujours actif PD0.

Par conséquent, le circuit intégré CI bénéficie de plusieurs degrés de basse consommation MD_LP1, MD_LP2 (voir figures 2 et 3), en offrant la possibilité de désactiver et placer dans l'état de rétention une sélection de l'un ou plusieurs desdits domaines PD1, PD2, alimentés par le domaine d'alimentation toujours actif PD0.

On pourra désigner ces dernier « premier domaine à état de rétention » PD1 (qui sera dûment distingué du « premier » domaine toujours actif PD0, même en l'absence de mention « à état de rétention »), et « deuxième domaine à état de rétention » PD2.

On se réfère désormais à la figure 2.

La figure 2 illustre le circuit intégré de la figure 1, dans un mode basse consommation MD_LP1.

Dans le mode basse consommation MD_LP1, le deuxième domaine PD2 est désactivé et placé dans l'état de rétention, tandis que le premier domaine à état de rétention PD1 est maintenu en état de marche, alimenté par la tension d'alimentation principale V11.

Le deuxième domaine PD2 n'est plus alimenté par la tension d'alimentation principale V11 et est par exemple déconnecté du régulateur LDO/SMPS par le circuit de commutation respectif SW2 ouvert.

Les moyens de rétentions du deuxième domaine PD2 sont alimentés, via les lignes d'alimentation auxiliaires LGN, avec la tension d'alimentation V11_0 du premier domaine d'alimentation toujours actif PD0.

Par exemple, la tension d'alimentation principale V11 fournie au premier domaine toujours actif PD0 et au premier domaine PD1, peut être abaissée à 0,7V dans le mode basse consommation MD_LP1.

Afin de mettre en oeuvre la désactivation et la fonctionnalité de rétention du deuxième domaine d'alimentation PD2, des commandes ISL_V11_2, SV_VII_2, RSTR_V11_2 sont initiées dans un domaine d'alimentation en activité PD1.

Le premier domaine à état de rétention PD1 comporte des moyens de commande PwrCtrl_V11_1, configurés pour commander la désactivation et le placement dans l'état de rétention du deuxième domaine à état de rétention PD2 ; ainsi que la réactivation ou le réveil du deuxième domaine PD2 dans l'état de marche, c'est-à-dire placé hors de l'état de rétention désactivé.

Les moyens de commande PwrCtrl_V11_1 sont par exemple incorporés au sein d'un automate de commande du type machine d'états FSM du premier domaine PD1, et sont configurés pour générer au moins :
un signal de commande d'isolation ISL_ V11_2 apte à commander l'isolation des circuits de rétention des moyens de rétention du deuxième domaine PD2 ;
un signal de sauvegarde SV_V11_2 apte à commander une saisie de l'état statique en cours dans le deuxième domaine PD2, par les moyens de rétentions, qui sera conservé au cours de l'état de rétention ;
un signal de rétablissement RSTR_V1_2 apte à commander un retour à l'état de marche, c'est-à-dire un réveil hors de l'état de rétention du deuxième domaine PD2.

On se réfère désormais à la figure 3.

La figure 3 illustre le circuit intégré des figures 1 et 2, dans un mode très basse consommation MD_LP2.

Dans le mode très basse consommation MD_LP2, le deuxième domaine PD2 est désactivé et placé dans l'état de rétention, et le premier domaine PD1 est lui-aussi désactivé et placé dans l'état de rétention.

Le premier domaine DP1 et le deuxième domaine PD2 ne sont plus alimentés par la tension d'alimentation principale V11 et sont par exemple déconnectés du régulateur LDO/SMPS par les circuits de commutations respectifs SW1, SW2 ouverts.

Les moyens de rétentions du premier domaine PD1 et du deuxième domaine PD2 sont alimentés, via les lignes d'alimentation auxiliaires LGN, avec la tension d'alimentation V11_0 du premier domaine d'alimentation toujours actif PD0.

Par exemple, la tension d'alimentation principale V11 fournie au premier domaine toujours actif PD0 peut être abaissée à 0,66V dans le mode très basse consommation MD_LP2.

De manière analogue au deuxième domaine PD2, afin de mettre en oeuvre la désactivation et la fonctionnalité de rétention du premier domaine d'alimentation PD1, des commandes ISL_V11_2, SV_V11_2, RSTR_V11_2 sont initiées dans un domaine d'alimentation en activité PD33 (ou PD0).

Ainsi, des moyens de commande PwrCtrl_V33 sont configurés pour commander la désactivation dans l'état de rétention du premier domaine PD1 ; ainsi que la réactivation ou le réveil du premier domaine PD1 dans l'état de marche, c'est-à-dire hors de l'état de rétention désactivé.

Les moyens de commande PwrCtrl_V33 sont par exemple incorporés au sein d'un automate de commande du type machine d'états FSM d'un domaine d'alimentation toujours actif. Ce domaine d'alimentation toujours actif peut être par exemple le domaine d'alimentation PD33 alimenté par la tension externe V33 (VDD) ; ou bien, en alternative, le premier domaine d'alimentation toujours actif PD0.

Les moyens de commande PwrCtrl_V33 sont eux-aussi configurés pour générer au moins :
un signal de commande d'isolation ISL_V11_1 apte à commander l'isolation des circuits de rétention des moyens de rétention du premier domaine PD1 ;
un signal de sauvegarde SV_V11_1 apte à commander une saisie de l'état statique en cours dans le premier domaine PD1, par les moyens de rétentions, qui sera conservé au cours de l'état de rétention ;
un signal de rétablissement RSTR_V1_1 apte à commander un retour à l'état de marche, c'est-à-dire un réveil hors de l'état de rétention du premier domaine PD1.

En résumé, avec N=2 dans les figures 1, 2 et 3, les domaines d'alimentation aptes à être désactivé et placés dans l'état de rétention PD1, PD2 sont organisés en N rangs hiérarchiques.

La hiérarchie est faite de sorte que des moyens de commande PwrCtrl_V11_J-1, configurés pour commander la désactivation et le placement dans l'état de rétention et la réactivation hors de l'état de rétention, de respectivement chaque domaine de rang J (PD2, pour J=N=2), appartiennent au domaine de rang inférieur J-1 (PD1, pour J=N=2).

Les moyens de commande PwrCtrl_V33 configurés pour commander la désactivation et le placement dans l'état de rétention et la réactivation hors de l'état de rétention du domaine de rang le plus bas PD1, appartiennent à un autre domaine d'alimentation, soit le premier domaine d'alimentation toujours actif PD0, soit l'autre domaine d'alimentation toujours actif PD33 alimenté par la tension V33, c'est à dire une autre tension d'alimentation principale.

Le circuit intégré CI décrit en relation avec les figures 1, 2 et 3 permet par exemple de concevoir le premier domaine d'alimentation toujours actif PD0 avec une taille et une fonctionnalité minimale, de manière à avoir une consommation d'énergie extrêmement réduite, notamment dans le mode très basse consommation MD_LP2.

Le domaine apte à être désactivé et placé dans l'état de rétention de rang le plus bas PD1, peut lui aussi être conçu avec une taille tendant à être minimisée, de manière à avoir une consommation d'énergie réduite, notamment pour le mode basse consommation MD_LP1.

Par exemple, le deuxième domaine à état de rétention PD2 peut comporter la grande majorité des fonctionnalités de la partie logique LG alimentée par la tension d'alimentation principale V11 ; tandis que le premier domaine à état de rétention PD1 peut comporter seulement quelques fonctionnalités de la partie logiques, et la fonction des moyens de commande PwrCtrl_V11_1.

Les fonctionnalités mise en oeuvre par le premier domaine PD1 peuvent être des fonctionnalités relatives au réveil du deuxième domaine PD2, par exemple issues de moyens numériques ou logicielles, par exemple issues d'opérations de décodages d'une information communiquée sur un bus de données.

Les fonctionnalités du deuxième domaine PD2 peuvent par exemple représenter plus de 95% de la partie logique alimenté par la tension d'alimentation principale V11, par exemple 97,5%.

Les fonctionnalités du premier domaine PD1 peuvent quant à elles représenter moins de 5% de la partie logique (alimenté par la tension d'alimentation principale V11), par exemple 2,4%.

Le premier domaine toujours actif PD0 peut quant à lui représenter une portion marginale de la partie logique alimenté par la tension d'alimentation principale V11, par exemple 0,1%. Par exemple, la fonctionnalité du premier domaine toujours actif PD0 peut inclure seulement la transmission de la tension d'alimentation V11_0 sur les lignes d'alimentations auxiliaires LGN.

Par ailleurs, étant donné la petite quantité de fonctionnalité du premier domaine PD1, les moyens de commandes PwrCtrl_V33 commandant l'état de rétention du premier domaine PD1, sont réalisés proportionnellement en petite quantité. Leur consommation en état de marche est elle aussi faible proportionnellement.

Ainsi, les moyens de commandes PwrCtrl_V33 prévus pour commander l'état de rétention du premier domaine PD1, présentent une consommation grandement inférieure à la consommation des moyens de commande PwrCtrl_V11_1 prévus pour commander l'état de rétention du deuxième domaine PD2.

Ceci s'applique à la fois dans le cas où les moyens de commandes PwrCtrl_V33 sont réalisés dans le domaine toujours actif PD33 alimenté par une tension d'alimentation externe V33 ; et dans le cas où ils sont réalisés dans le domaine toujours actif PD0 alimenté par la tension d'alimentation principale V11.

En conséquence, dans le mode très basse consommation MD_LP2, la désactivation dans l'état de rétention du premier domaine PD1 offre un gain concret et non-négligeable, sur la réduction de la consommation, par rapport au mode basse consommation MD_LP1.

La figure 4 illustre une procédure 400 de désactivation du domaine d'alimentation PDJ de rang J, mise en oeuvre dans un procédé de gestion de l'alimentation du circuit intégré CI décrit précédemment en relation avec les figures 1 à 3.

Le procédé de gestion de l'alimentation comprend en premier lieu une alimentation 402 de la partie logique LG du circuit intégré avec une tension d'alimentation principale V11.

Et, pour mettre en oeuvre une désactivation 406 d'un domaine d'alimentation de rang J dans l'état de rétention, la procédure 400 comprend une séquence de désactivations et placements dans l'état de rétention successifs 404 de chaque domaine d'alimentation de rang supérieur, par rangs décroissants N ... J.

Ainsi, pour désactiver le domaine PDJ (avec 1<J≤N) on commence par désactiver le domaine PDN de rang N le plus grand dans une étape 404.

L'étape 404 comporte ainsi une génération des signaux de commande plaçant dans l'état de rétention le domaine PDN, et initiée dans le domaine de rang inférieure PDN-1.

Le domaine PDN est déconnecté de la tension d'alimentation principale V11, et les moyens de rétention de PDN sont alimentés par la tension V11_0 du domaine d'alimentation toujours actif PD0.

Optionnellement on peut réduire la tension d'alimentation principale V11 (alimentant le domaine d'alimentation toujours actif PD0), par exemple on passe de V11=0,9V à V11=0,7V.

Cette étape est mise en oeuvre pour tous les domaines N...J de rang supérieur à J.

Ensuite, le domaine PDJ de rang J (avec 1<J≤N) est désactivé dans une étape 406.

L'étape 406 comporte ainsi une génération des signaux de commande plaçant dans l'état de rétention le domaine PDJ, et initiée dans le domaine de rang inférieure PDJ-1.

Le domaine PDJ est déconnecté de la tension d'alimentation principale V11, et les moyens de rétention de PDJ sont alimentés par la tension V11_0 du domaine d'alimentation toujours actif PD0.

Optionnellement on peut réduire la tension d'alimentation principale V11 (alimentant le domaine d'alimentation toujours actif PD0), par exemple on passe de V11=0,9V à V11=0,7V.

Au-delà du domaine de rang J, on peut désactiver le domaine PD1 de rang le plus bas, dans une étape 408, après avoir désactivé les éventuels domaines de rang compris entre J et 1 (J... 1).

D'un autre point de vue, avant de désactiver le domaine PD1 de rang le plus bas, on met en oeuvre les étapes 404-406 telle que décrite ci-dessus, avec J=2.

Le domaine PD1 de rang le plus bas est désactivé et placé dans l'état de rétention dans une étape 408, comportant une génération des signaux de commande plaçant dans l'état de rétention du domaine PDJ, et initiée dans le domaine toujours actif PD33.

Le domaine PD1 est déconnecté de la tension d'alimentation principale V11, et les moyens de rétention de PD1 sont alimentés par la tension V11_0 du domaine d'alimentation toujours actif PD0.

Optionnellement on peut réduire la tension d'alimentation principale V11 (alimentant le domaine d'alimentation toujours actif PD0), par exemple on passe de V11=0,7V à V11=0,66V.

On notera qu'avec N=2 et J=1, la mise en oeuvre du procédé 400 est illustré par l'enchainement des figures 1, 2 et 3.

La figure 5 illustre une procédure 500 de réactivation du domaine d'alimentation PDJ de rang J, mise en oeuvre dans un procédé de gestion de l'alimentation du circuit intégré CI décrit précédemment en relation avec les figures 1 à 3.

Le procédé de gestion de l'alimentation comprend en premier lieu une alimentation 502 de la partie logique LG du circuit intégré avec une tension d'alimentation principale V11.

Et, pour mettre en oeuvre une réactivation 506 d'un domaine d'alimentation de rang J hors de l'état de rétention, la procédure 500 comprend une séquence de réactivations et placements hors de l'état de rétention successifs 504 de chaque domaine d'alimentation de rang inférieur, par rangs croissants 1 ... J.

Ainsi, pour réactiver le domaine PDJ (avec 1<J≤N) on commence par réactiver le domaine PD1 de rang le plus bas dans une étape 504, si ce domaine était désactivé.

L'étape 504 comporte ainsi une génération des signaux de commande de réveil hors de l'état de rétention du domaine PD1, initiée dans le domaine toujours actif PD33.

Le domaine PD1 est reconnecté à la tension d'alimentation principale V11 qui alimente toutes les fonctionnalités du domaine PD1.

Optionnellement on peut augmenter la tension d'alimentation principale V11, par exemple on passe de V11=0,66V à V11=0,7V.

On réactive tous les domaines de rang compris entre 1 et J, par des étapes 506 successives comportant chacune une génération des signaux de commande de réveil hors de l'état de rétention du domaine PDJ, initiée dans le domaine de rang inférieure PDJ-1.

Le domaine PDJ est reconnecté à la tension d'alimentation principale V11, qui alimente toutes les fonctionnalités du domaine PDJ.

Optionnellement on peut augmenter la tension d'alimentation principale V11, par exemple on passe de V11=0,7V à V11=0,9V.

De même, pour réactiver le domaine PDN de rang le plus haut dans l'étape 508, on réactive tous les domaines de rang compris entre J et N, par des étapes 506 successives comportant chacune une génération des signaux de réveil hors de l'état de rétention du domaine PDJ, initiée dans le domaine de rang inférieure PDJ-1.

Dans l'étape 508 le domaine PDN est reconnecté à la tension d'alimentation principale V11, qui alimente toutes les fonctionnalités du domaine PDN.

Optionnellement on peut augmenter la tension d'alimentation principale V11, par exemple on passe de V11=0,7V à V11=0,9V.

## Revendications

1. Circuit intégré comportant une partie logique (LG) comprenant un premier domaine d'alimentation dit toujours actif (PD0) apte à être alimentée par une tension d'alimentation (V11_0), et au moins deux domaines d'alimentation aptes à être désactivés et placés dans un état de rétention (PD1, PD2), dans lequel la partie logique (LG) comporte des lignes d'alimentation auxiliaires (LGN) configurées pour alimenter des moyens de rétention de chaque domaine d'alimentation désactivé et placé dans l'état de rétention (PD1, PD2) avec ladite tension d'alimentation (V11_0) du premier domaine d'alimentation toujours actif (PD0).

2. Circuit intégré selon la revendication 1, dans lequel lesdits domaines d'alimentation aptes à être désactivés et placés dans l'état de rétention (PD1, PD2) sont organisés en rangs hiérarchiques, de sorte que des moyens de commande (PwrCtrl_V11_1), configurés pour commander la désactivation et le placement dans l'état de rétention ou non de respectivement chaque domaine de rang J (PD2), appartiennent au domaine de rang inférieur J-1 (PD1) ; les moyens de commande (PwrCtrl_V33) configurés pour commander la désactivation et le placement dans l'état de rétention ou non du domaine de rang le plus bas (PD1) appartenant à un autre domaine d'alimentation (PD33, PD0).

3. Circuit intégré selon la revendication 2, dans lequel l'autre domaine d'alimentation est le premier domaine d'alimentation toujours actif (PD0), ou bien est un autre domaine d'alimentation toujours actif (PD33) alimenté par une autre tension d'alimentation principale (V33).

4. Circuit intégré selon l'une des revendications 2 ou 3, dans lequel la partie logique (LG) est configurée pour désactiver et placer dans l'état de rétention le domaine d'alimentation de rang J (PD1), par une séquence comprenant des désactivations et placements dans l'état de rétention de chaque domaine d'alimentation de rang supérieur (PD2), successivement par rangs décroissants (N ... J).

5. Circuit intégré selon l'une des revendications 2 à 4, dans lequel la partie logique (LG) est configurée pour réactiver et placer hors de l'état de rétention le domaine d'alimentation de rang J (PD2), par une séquence comprenant des réactivations et placements hors de l'état de rétention de chaque domaine d'alimentation de rang inférieur (PD1), successivement par rangs croissants (1 ... J).

6. Procédé de gestion de l'alimentation d'un circuit intégré (CI) muni d'une partie logique (LG) comportant un premier domaine d'alimentation dit toujours actif (PD0) alimenté par une tension d'alimentation (V11_0), et au moins deux domaines d'alimentation aptes à être désactivés et placés dans un état de rétention (PD1, PD2), dans lequel le procédé comprend une alimentation de moyens de rétention de chaque domaine d'alimentation désactivé et placé dans l'état de rétention (PD1, PD2) avec la tension d'alimentation (V11_0) du premier domaine d'alimentation toujours actif (PD0).

7. Procédé selon la revendication 6, dans lequel lesdits domaines d'alimentation aptes à être désactivés et placés dans l'état de rétention (PD1, PD2) sont organisés en rangs hiérarchiques, de sorte que chaque domaine de rang J (PD2) est désactivé et placé dans l'état de rétention ou non, par des commandes (ISL_V11_2, SV_V11_2, RSTR_V11_2) issues du domaine de rang inférieur J-1 (PD1) ; le domaine de rang le plus bas (PD1) étant désactivé et placé dans l'état de rétention ou non par des commandes (ISL_V11_2, SV_V11_2, RSTR_V11_2) issues d'un autre domaine d'alimentation (PD33, PD0).

8. Procédé selon la revendication 7, dans lequel l'autre domaine d'alimentation est le premier domaine d'alimentation toujours actif (PD0), ou bien est un autre domaine d'alimentation toujours actif (PD33) alimenté par une autre tension d'alimentation principale (V33).

9. Procédé selon l'une des revendications 7 ou 8, comprenant une désactivation et un placement dans l'état de rétention d'un domaine d'alimentation de rang J (PD1), par une séquence comprenant des désactivations et placements dans l'état de rétention de chaque domaine d'alimentation de rang supérieur (PD2), successivement par rangs décroissants (N ... J).

10. Procédé selon l'une des revendications 7 à 9, comprenant une réactivation et un placement hors de l'état de rétention d'un domaine d'alimentation de rang J (PD2), par une séquence comprenant des réactivations et placements hors de l'état de rétention de chaque domaine d'alimentation de rang inférieur (PD1), successivement par rangs croissants (1 ... J).
